# EUROPÄISCHE PATENTSCHRIFT

(11) **EP 2 818 888 B1**
(45) Veröffentlichungstag und Bekanntmachung des Hinweises auf die Patenterteilung: **27.03.2019**
(21) Anmeldenummer: 14000241.1
(22) Anmeldetag: 23.01.2014
(51) Int. Cl.: G01S 7/40, G01S 13/86, G01S 13/93, G01S 7/02

(54) **Steuergerät für ein mit einem Radarsensor ausgestattetes Kraftfahrzeug und Verfahren zum Betrieb des Steuergerätes im Produktionsprozess des Kraftfahrzeuges**
Control device for a motor vehicle equipped with a radar sensor and method for operating the control device in the production process of the motor vehicle
Appareil de commande pour un véhicule automobile équipé d'un capteur radar et procédé de fonctionnement de l'appareil de commande dans le processus de production du véhicule automobile

(30) Priorität: 29.06.2013 DE 102013011044
(43) Veröffentlichungstag der Anmeldung: 31.12.2014
(73) Patentinhaber: MAN Truck & Bus AG, 80995 München (DE)
(72) Erfinder: Hoffmann, Guido, 82216 Maisach (DE); Körner, Tobias, 86420 Diedorf (DE)
(74) Vertreter: Liebl, Thomas

(56) Entgegenhaltungen:
- DE-A1- 10 107 219
- DE-A1-102010 028 377

## Beschreibung

Gegenstand der Erfindung ist eine Anordnung für ein Kraftfahrzeug, insbesondere für ein Nutzfahrzeug, mit einem Steuergerät, wobei im Fahrbetrieb auf dem Steuergerät programmgestützt wenigstens ein Fahrerassistenzsystem zur Ausführung kommt, wobei dieses wenigstens eine Fahrerassistenzsystem Abstands- und/ oder Geschwindigkeitsdaten von einem Radarsensor verwendet, die das Steuergerät von dem mit diesem verbundenen Radarsensor übernimmt. Weiter gehört es zur Erfindung, ein Verfahren zum Betrieb eines solchen Steuergerätes im Produktionsprozess des Kraftfahrzeugs anzugeben.

In Kraftfahrzeugen nach dem heutigen technischen Stand kommen häufig sogenannte Fahrerassistenzsysteme zum Einsatz, die den Fahrer einerseits von Routinetätigkeiten befreien und die andererseits vor Gefahrensituationen warnen oder aktiv in das Fahrgeschehen selbstständig eingreifen, wenn der Fahrzeugführer z.B. aufgrund seiner längeren Reaktionszeit dazu nicht in der Lage ist, um so eine Notsituation abzuwenden oder deren Folgen abzumildern.

Ein derartiges Fahrerassistenzsystem ist unter der Bezeichnung Adaptive Cruise Control (ACC), bzw. in einer neueren Version als Adaptive Cruise Control Stop&Go (ACC Stop&Go) bekannt geworden. Hinter dieser Bezeichnung verbirgt sich ein programmgestütztes Verfahren, das auf dem Steuergerät zur Ausführung kommt und das vorausfahrende Fahrzeuge erkennt, deren Geschwindigkeiten ermittelt und durch Brems- und Motoreingriffe einen gewünschten Abstand einhält. Während das ursprüngliche ACC-Verfahren bei niedrigen Geschwindigkeiten nicht eingesetzt werden konnte, erlaubt das neuere ACC Stop&Go durch verbesserte Sensoren die Verwendung bis zum Stillstand. Rollt der Verkehr an, genügt eine kurze Bestätigung des Fahrers, und das Fahrzeug folgt wieder selbstständig dem Vorausfahrenden. Selbstverständlich bleiben bei den ACC-Verfahren alle Eingriffsmöglichkeiten des Fahrers erhalten.

Ein anderes derartiges System das auf die Daten des Radarsensors zugreift ist das sogenannte Notbremssystem das auch unter der Bezeichnung "Advanced Emergency Braking System" (AEBS) bzw. unter der Bezeichnung "Autonomous Emergency Braking system" (AEB System, AEBs) bekannt ist. Hier löst das vorausschauende Notbremssystem in kritischen Situationen Maßnahmen zur Kollisionsvermeidung oder -verminderung aus. Dazu gehört es, den Fahrer vorausschauend zu warnen, wenn es z.B. zu einer Kollision kommen kann. Ist eine Kollision unvermeidbar, löst das System eine Notbremsung aus, die das Verletzungsrisiko zumindest reduziert.

Kern der vorstehend beschriebenen Fahrerassistenzsysteme sind Radarsensoren, deren Aufgabe es ist, Objekte zu erkennen sowie deren Geschwindigkeit und Position im Vergleich zur Bewegung des den Radarsensor tragenden Fahrzeugs zu ermitteln. Zu diesem Zweck sendet der Radarsensor Signale aus, die im sogenannten Mikrowellenfrequenzbereich liegen und die von den im Strahlbereich des Radarsensors befindlichen Objekten reflektiert werden. Heute üblich sind Dauerstrichradargeräte mit Frequenzmodulation (FMCW), die z.B. im Frequenzbereich 76 GHz bis 77 GHz senden. Aus dem Vergleich von Phase und Amplitude des reflektierten Radarsignals mit Phase und Amplitude des Ausgesandtensignals werden Rückschlüsse auf die Position eines Objektes gezogen. Die Relativgeschwindigkeit und Entfernung eines Objektes zu dem den Radarsensor tragenden Fahrzeugs wird anhand des so genannten Doppler-Effektes, also der Frequenzverschiebung zwischen dem ausgesandten und dem empfangenen Signal und der Zeitverzögerung zwischen diesen ermittelt. Die Reichweiten derartiger moderner Radarsensoren werden mit 250m angegeben, der Öffnungswinkel mit 30° (vgl. z.B. Fernbereichsradarsensor LRR3 der Firma Bosch).

Selbstverständlich können neben den vorstehend angesprochenen Dauerstrichradargeräten mit Frequenzmodulation auch andere Systeme mit anderen Modulationsarten zum Einsatz kommen, die Erfindung ist natürlich nicht auf die vorstehend beispielhaft genannte Radarsensortechnologie beschränkt. Gleiches gilt für Reichweite und Öffnungswinkel.

Zwar wird im Allgemeinen davon ausgegangen, dass derartige Radarsensoren aufgrund ihrer geringen Strahlungsleistung gesundheitlich unbedenklich sind, es existieren aber wegen der relativ kurzen Zeit, die diese Geräte im Straßenverkehr eingesetzt werden keine Langzeiterfahrungen. Insbesondere fehlen solche Langzeiterfahrungen auch in der Produktion derartiger Kraftfahrzeuge. Gerade in der Produktion ist aber zu beachten, dass sich dort beschäftigte Personen ständig in unmittelbarer Nähe zum Fahrzeug und eben auch zum Radarsensor aufhalten.

Aus den Bereichen in denen Langzeiterfahrungen existieren, insbesondere aus dem militärischen Bereich, ist es andererseits bekannt, dass es in den 1980er Jahren beim Bedien- und Wartungspersonal wegen unzureichender Abschirmung von Radaranlagen aufgrund der dadurch erhöhten Strahlenbelastung zu einer großen Anzahl von Krebserkrankungen kam.

Wegen der fehlenden Erfahrung bei der Produktion von mit Radarsensoren ausgerüsteten Kraftfahrzeugen, ist die Auswirkung auf den menschlichen Körper zumindest als bedenklich einzustufen. Um die Arbeitssicherheit zu gewährleisten ist es daher unumgänglich, im Produktionsablauf Maßnahmen zu ergreifen, um die Einschaltdauer des Radarsensors bzw. dessen Sendeeinheit einerseits und andererseits gegebenenfalls die Abstrahlstärke des Radarsensors zu minimieren.

Abgesehen von den möglichen gesundheitlichen Auswirkungen auf das Produktionspersonal ist zu beachten, dass das durch die Abstrahlung der Radarsensoren verstärkte Mikrowellenrauschen in der Produktionsumgebung sich eventuell auch negativ auf andere, insbesondere messtechnische Teile des Produktionsprozesses auswirken könnte.

Zur Minimierung der Radarwellenabstrahlung im Straßenverkehr sind bereits Bestrebungen bekannt, die Ausgangsleistung solcher Geräte geschwindigkeitsabhängig zu regeln, um das Gefährdungspotenzial, insbesondere für Personen, so gering wie möglich zu halten. Ein derartiger Vorschlag ist beispielsweise in der DE 10 2009 021 284 A1 beschrieben. Weiter wird dort vorgeschlagen, gegebenenfalls den Radarsensor auch völlig zu deaktivieren.

Ferner ist aus der DE 101 07 219 A1 ein Verfahren bekannt, das sicherstellen soll, dass kein Fahrzeug das mit einem ACC-System ausgestattet ist, ohne justierten Radarsensor ausgeliefert wird. Dazu ist vorgesehen, dass in den Radarsensor eine Information eingebracht wird, wobei diese Information so codiert ist, dass verschiedene Zustände unterscheidbar sind. Dabei handelt es sich um die Zustände "Radarsensor nicht justiert" und "Radarsensor justiert". Liegt die Information "Radarsensor justiert" vor wird der Radarsensor zum Betrieb freigegeben.

Die erste vorgeschlagene Lösung weist insofern Mängel auf, als Radarsensoren gerade im Produktionsprozess auch bei Stillstand betrieben werden müssen, um Funktionstests durchführen zu können. Die zweite Lösung stellt zwar sicher, dass der Radarsensor bis zur Justage deaktiviert bleibt, dann aber freigegeben wird. In Konsequenz strahlt der Radarsensor dann für den gesamten restlichen Produktionsprozess ab, was aber gerade verhindert werden soll.

In der weiteren DE 10 2010 028 377 A1 ist eine Radarvorrichtung offenbart, die einen Millimeterwellenradarbetrieb steuert und an einem Fahrzeug befestigt ist. Diese Radarvorrichtung weist ein Fahrzeuggeschwindigkeitserfassungsmittel zur Erfassung der Fahrzeuggeschwindigkeit, ein Ausgabesteuermittel zur Steuerung der Ausgangsleistung der Radarvorrichtung und ein Ausgangsleistungsfestlegungsmittel zum Festlegen der Ausgangsleistung der Radarvorrichtung mit mindestens zwei verschiedenen Ausgangsleistungspegeln in Antwort auf die Fahrzeuggeschwindigkeit auf. Dabei ist das Ausgangsleistungsfestlegungsmittel ausgebildet, das Ausgabesteuermittel zu betreiben, um die Ausgangsleistung zu ändern, um die Ausgangsleistung zu sein, die durch das Ausgangsleistungsfestlegungsmittel festgelegt wird.

Ausgehend vom vorstehenden Stand der Technik ist es Aufgabe der Erfindung, eine Anordnung und ein Verfahren anzugeben, die es erlauben, die Einschaltzeiten und gegebenenfalls die Strahlungsleistung der Sendeeinheit eines in einem Kraftfahrzeug verbauten Radarsensors im Produktionsprozess auf ein Minimum zu reduzieren.

Gelöst wird die Aufgabe hinsichtlich der Anordnung durch die kennzeichnenden Merkmale des Anspruchs 1 und hinsichtlich des Verfahrens durch die kennzeichnenden Merkmale des Anspruchs 3, vorteilhafte Ausgestaltungen sind in den abhängigen Ansprüchen gekennzeichnet.

Wenn im Vorstehenden und nachfolgend der Zustand des Radarsensors als "aktiv" bezeichnet ist, soll darunter verstanden werden, dass der Radarsensor in diesem Zustand Radarstrahlen aussendet, wird hingegen der Zustand des Radarsensors als "inaktiv" oder der Radarsensor als "deaktiviert" bezeichnet, bedeutet dies, dass der Radarsensor in diesem Zustand keine Radarstrahlen aussendet. Dieser "inaktive" Zustand bedeutet nicht zwangsläufig, dass der Radarsensor komplett abgeschaltet ist, es können vielmehr steuerungstechnische Aufgaben vom Radarsensor übernommen werden, wenn dies sein konstruktiver Aufbau vorsieht. Mit anderen Worten, wenn im Rahmen dieser Ausführungen in sprachlicher Vereinfachung von einem "abgeschalteten" oder "inaktiven" Radarsensor die Rede ist, bedeutet dies lediglich, dass der Radarsensor oder genauer gesagt dessen sendeseitiger Hochfrequenzteil keine Radarstrahlen aussendet.

Bei der Lösung der Aufgabe wird von einem Kraftfahrzeug insbesondere Nutzfahrzeug mit wenigstens einem Steuergerät ausgegangen, wobei auf dem Steuergerät im Fahrbetrieb programmgestützt wenigstens ein Fahrerassistenzsystem zur Ausführung kommt, das Abstands- und/oder Geschwindigkeitsdaten von einem Radarsensor verwendet, die das Steuergerät von dem mit diesem verbundenen Radarsensor übernimmt und wobei das Steuergerät die Eigengeschwindigkeit des Kraftfahrzeugs zur Veränderung des Schaltzustandes des Radarsensors nutzt. Weiter wird von einem Radarsensor ausgegangen, in den eine Information eingebracht ist oder wird, wobei diese Information so codiert ist, dass verschiedene Zustände unterscheidbar sind. Dabei handelt es sich um die Zustände "Radarsensor nicht justiert" und "Radarsensor justiert".

Zur vorteilhaften Minimierung der Einschaltzeiten des Radarsensors, beziehungsweise der Sendeeinheit des Radarsensors, ist vorgesehen, dass das Steuergerät über Geber weitere Zustandsdaten des Kraftfahrzeugs zyklisch übernimmt und vorhält. Hinsichtlich der Zustandsdaten sind Bedingungen im Steuergerät vorgegeben, unter denen der Schaltzustand "Radarsensor aktiv" beziehungsweise "Radarsensor inaktiv" aufrechterhalten oder hergestellt wird. Hierzu werden in einer ersten Routine die Zustandsdaten zyklisch ermittelt und vorgehalten und es wird in einer zweiten Routine überprüft, welche der vorgegebenen Bedingungen vorliegen und sodann der zugehörige Schaltzustand des Radarsensors aufrechterhalten oder hergestellt.

Bei den weiteren Zustandsdaten handelt es sich wenigstens um den Justagezustand des Radarsensors, den Betätigungszustand der Feststellbremse, den Betätigungszustand der Betriebsbremse, das Vorhandensein eines Befehls zur Funktionskontrolle, das Ergebnis der Funktionskontrolle, die Eigengeschwindigkeit des Fahrzeugs und den Status des Produktionsprozesses. Das Steuergerät durchläuft zyklisch programmgestützt einen Steuerungsablauf, bei dem abhängig von den Zustandsdaten, einschließlich der Eigengeschwindigkeit des Kraftfahrzeugs, bestimmte Schaltzustände des Radarsensors aufrechterhalten oder hergestellt werden.

Abhängig von den Zustandsdaten werden vom Steuergerät folgende Schaltzustände des Radarsensors hergestellt:
wenn
   - der Radarsensor nicht justiert wurde
und der Zustand des Radarsensors inaktiv ist, belässt das Steuergerät diesen inaktiv und dann wenn der Zustand des Radarsensors aktiv ist, schaltet das Steuergerät diesen von seinem aktiven in seinen inaktiven Zustand,
wenn
   - der Radarsensor justiert wurde und
   - eine Funktionskontrolle des Radarsensors noch nicht erfolgreich durchgeführt wurde oder
   - die Feststellbremse aktiviert ist oder
   - die Betriebsbremse aktiviert ist und gleichzeitig die Eigengeschwindigkeit null ist
und der Zustand des Radarsensors inaktiv ist, belässt das Steuergerät diesen inaktiv und dann wenn der Zustand des Radarsensors aktiv ist, schaltet das Steuergerät diesen von seinem aktiven in seinen inaktiven Zustand,
wenn
   - der Radarsensor justiert wurde und
   - eine Funktionskontrolle des Radarsensors erfolgreich durchgeführt wurde und
   - die Feststellbremse nicht aktiviert ist und
   - die Betriebsbremse nicht aktiviert ist und gleichzeitig die Eigengeschwindigkeit nicht null ist
und der Zustand des Radarsensors inaktiv ist, schaltet das Steuergerät diesen aktiv und dann wenn der Zustand des Radarsensors aktiv ist, belässt das Steuergerät diesen in seinem aktiven Zustand,
wenn
   - der Radarsensor justiert wurde und
   - eine Funktionskontrolle des Radarsensors durchgeführt werden soll
und der Zustand des Radarsensors inaktiv ist, schaltet das Steuergerät diesen aktiv und dann wenn der Zustand des Radarsensors aktiv ist, belässt das Steuergerät diesen in seinem aktiven Zustand und führt sodann die Funktionskontrolle durch und hält das Ergebnis der Funktionskontrolle fest.

In weiterer vorteilhafter Ausgestaltung der Anordnung ist vorgesehen, dass ein Radarsensor zur Anwendung kommt dessen Strahlungsleistung veränderbar ist und dass in dem Steuergerät Mittel vorgesehen sind, die es erlauben, die Strahlungsleistung des Radarsensors zu reduzieren, wenn dieser im Produktionsprozess aktiv geschaltet wird.

Das Verfahren zum Betreiben eines Radarsensors in einem Kraftfahrzeug der vorstehend genannten Art sieht vor, dass das Steuergerät von dem Zeitpunkt an, zu dem die Steuersysteme des Kraftfahrzeugs und der Radarsensor funktionsfähig sind, in einer ersten Routine zyklisch über mit ihm direkt oder indirekt verbundene Geber die Zustandsdaten des Kraftfahrzeugs abfragt und zwischenspeichert. Bei diesen Zustandsdaten handelt es sich, wie erwähnt, wenigstens um den Justagezustand des Radarsensors, den Betätigungszustand der Feststellbremse, den Betätigungszustand der Betriebsbremse, die Eigengeschwindigkeit des Kraftfahrzeugs, das Vorhandensein eines Befehls zur Funktionskontrolle für den Radarsensor, das Ergebnis der Funktionskontrolle und den Status des Produktionsprozesses.

Um während der Produktion des Kraftfahrzeugs, die Minimierung der Abstrahlung des Radarsensors zu erreichen, ist eine zweite Routine, die Produktions-Steuerroutine, vorgesehen. Diese hat die Aufgabe zu ermitteln, welche der oben genannten Bedingungen erfüllt sind und in Abhängigkeit davon den entsprechenden Schaltzustand des Radarsensors einzustellen. Dazu wird mittels der Produktions-Steuerroutine in einer ersten Abfrage ermittelt, ob die Justage des Radarsensors abgeschlossen ist. Wenn dies nicht zutrifft, wird der Radarsensor im Einschaltzustand inaktiv gehalten oder in diesen geschaltet und dann mit der ersten Abfrage fortgefahren.

Wenn diese erste Abfrage zutrifft, wird in einer zweiten Abfrage geprüft, ob die Funktionskontrolle des Radarsensors durchgeführt werden soll. Wenn dies zutrifft, wird zur Funktionskontrolle in eine Subroutine verzweigt. Wenn diese zweite Abfrage nicht zutrifft, wird in einer dritten Abfrage überprüft, ob die Funktionskontrolle bereits erfolgreich durchgeführt wurde. Wenn diese dritte Abfrage nicht zutrifft, wird der Radarsensor im Einschaltzustand inaktiv gehalten oder inaktiv geschaltet und dann mit der ersten Abfrage fortgefahren.

In der erwähnten Subroutine wird der Radarsensor im Einschaltzustand aktiv gehalten oder aktiv geschaltet und es wird in einem zweiten Schritt die Funktionskontrolle durchgeführt. Dies kann im einfachsten Fall dadurch geschehen, dass überprüft wird, ob das vom Radarsensor gesendete Signal als reflektiertes Signal empfangen wird. Dazu wird in einer Erfolgsabfrage ermittelt, ob die Funktionskontrolle erfolgreich war, also ob Reflexionsdaten im Radarsensor vorliegen. War die Funktionskontrolle erfolgreich, verzweigt die Subroutine zwischen der dritten Abfrage und einer vierten Abfrage wieder in die Hauptroutine zurück. War die Funktionskontrolle nicht erfolgreich, wird der Radarsensor bzw. zumindest dessen Sendeeinheit deaktiviert, eine Fehlermeldung ausgegeben und die Produktions-Steuerroutine beendet. An dieser Stelle kann dann zu einer Fehlerbehebungsroutine gesprungen werden.

Wenn die bereits oben erwähnte dritte Abfrage zutrifft, wird in einer vierten Abfrage überprüft, ob die Feststellbremse aktiviert ist. Wenn dies zutrifft wird der Radarsensor im Einschaltzustand inaktiv gehalten oder inaktiv geschaltet und dann mit der ersten Abfrage fortgefahren.

Wenn diese vierte Abfrage nicht zutrifft, wird in einer fünften Abfrage überprüft, ob die Geschwindigkeit 0 Km/h und die Betriebsbremse betätigt ist. Wenn dies zutrifft wird der Radarsensor im Einschaltzustand inaktiv gehalten oder inaktiv geschaltet und dann mit der ersten Abfrage fortgefahren.

Wenn diese fünfte Abfrage nicht zutrifft, wird der Radarsensor im Einschaltzustand aktiv gehalten oder aktiv geschaltet und dann in einer sechsten Abfrage überprüft, ob der Produktionsprozess beendet ist. Ist der Produktionsprozess nicht beendet, wird mit der ersten Abfrage fortgefahren, ist der Produktionsprozess beendet, wird auch die Produktions-Steuerroutine beendet und gegebenenfalls an den Anfang einer Fahrbetrieb-Routine gesprungen.

Mit den vorstehend beschriebenen Verfahren lässt sich die Einschaltzeit des Radarsensors beziehungsweise dessen Sendeeinheit im Produktionsablauf vorteilhaft minimieren, ohne dass eine Beeinträchtigung des Produktionsablaufs gegeben ist. Darüber hinaus erlaubt es der erfindungsgemäße Steuerungsablauf in vorteilhafter Weise, nahtlos und unter Nutzung der selben Anordnung und ähnlicher Verfahrensweise von der Produktions-Steuerroutine in eine Fahrbetrieb-Routine überzugehen.

Zu der oben vereinfacht dargestellten Funktionskontrolle für den Radarsensor ist anzumerken, dass selbstverständlich auch beliebig umfangreiche Funktionstests möglich sind, bei denen z.B. unter Zuhilfenahme von externen Hilfsmitteln, wie Messreflektoren, aus den vom Radarsensor ausgesendeten Radarstrahlen bestimmte Reflexionsmuster erzeugt werden und die so erzeugten und vom Radarsensor empfangenen Reflexionsmuster mit gespeicherten Reflexionsmustern verglichen werden. Abhängig vom Ergebnis wird dann eine Information über den Erfolg der Funktionskontrolle in einem Speicher hinterlegt, die dann bei der erwähnten Erfolgsabfrage ausgelesen wird. Vorteil solcher umfangreicher Funktionskontrollen ist es, mit größerer Sicherheit ein einwandfreies Funktionieren des Radarsensors zu gewährleisten.

Um festzustellen ob der Produktionsprozess abgeschlossen ist, wird vorteilhaft in einem Speicher des Steuergeräts eine von außen veränderbare Information abgelegt, die das Andauern oder den Abschluss des Produktionsprozesses kennzeichnet. Das Steuergerät kann diese gespeicherte Information in der sechsten Abfrage aus dem Speicher auslesen.

Der Grad der erwähnten Reduktion der Strahlungsleistung des Radarsensors, wenn dieser im Produktionsprozess aktiviert wird, kann vorteilhaft vom Zeck der Aktivierung abhängig gemacht sein, so dass z.B. beim der Funktionskontrolle eine höhere Strahlungsleistung zur Verfügung steht, als bei anderen Zwecken der Aktivierung.

Weiter ist es von Vorteil, eventuelle Reduktionen der Strahlungsleistung mit dem Beenden der Produktions-Steuerroutine aufzuheben.

Die vorstehend beschriebene Anordnung sowie das beschriebene Verfahren lassen sich vorteilhaft allgemein in Kraftfahrzeugen, insbesondere auch in Nutzfahrzeugen einsetzen.

Weitere Ausgestaltungen und Vorteile der Erfindung werden nachfolgend anhand der Zeichnungen näher erläutert, es zeigen:
- Fig. 1: Eine Prinzipdarstellung einer Anordnung zur Minimierung der Einschaltzeit eines Radarsensors beziehungsweise dessen Sendeeinheit im Produktionsablauf eines Kraftfahrzeugs
- Fig. 2: Eine Darstellung des Verfahrens zur Minimierung der Einschaltzeit eines Radarsensors beziehungsweise dessen Sendeeinheit im Produktionsablauf eines Kraftfahrzeugs
- Fig. 3: Eine Darstellung eines Verfahrens zur Minimierung der Einschaltzeit eines Radarsensors beziehungsweise dessen Sendeeinheit im Fahrbetrieb eines Kraftfahrzeugs

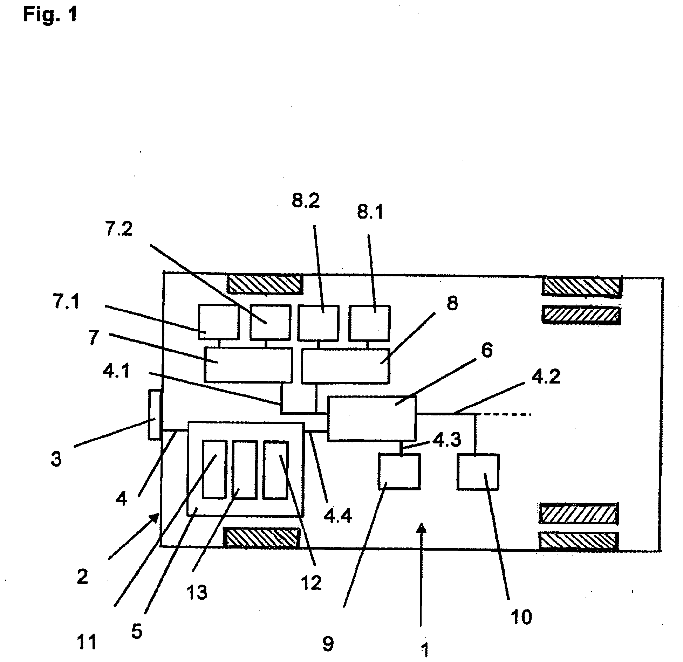

Die Darstellung in Fig. 1 zeigt in stark vereinfachter schematischer Darstellung ein Kraftfahrzeug 1, dessen Fahrzeugsteuerung durch ein CAN-Bussystem gebildet ist. Derartige CAN-Bussysteme bestehen aus mehreren Steuerkomponenten, die über eigene Prozessorleistung verfügen, also als selbstständige Recheneinheiten anzusehen sind. Verbunden sind diese Steuerkomponenten über CAN-Bussystem-Verbindungen entweder direkt oder über sogenannte "Gateway und Diagnoseinterfaceeinheiten", die die Aufgabe haben, unterschiedlich schnelle Teilbussysteme so zu verbinden, dass global benötigte Informationen allen Steuerkomponenten zur Verfügung stehen. Derartige CAN-Bussysteme sind weit verbreitet, so dass sich eine detaillierte Beschreibung der Busprotokolle und Datenaustauschmechanismen erübrigt. Das nachfolgend in Verbindung mit der Fig. 1 beschriebene Beispiel bedient sich eines solchen CAN-Bussystems, ohne dass dies einschränkend zu verstehen sein soll. Im Extrem wäre es genauso möglich, statt eines CAN-Bussystem eine zentrale Recheneinheit zu verwenden, die alle Steuerabläufe übernimmt.

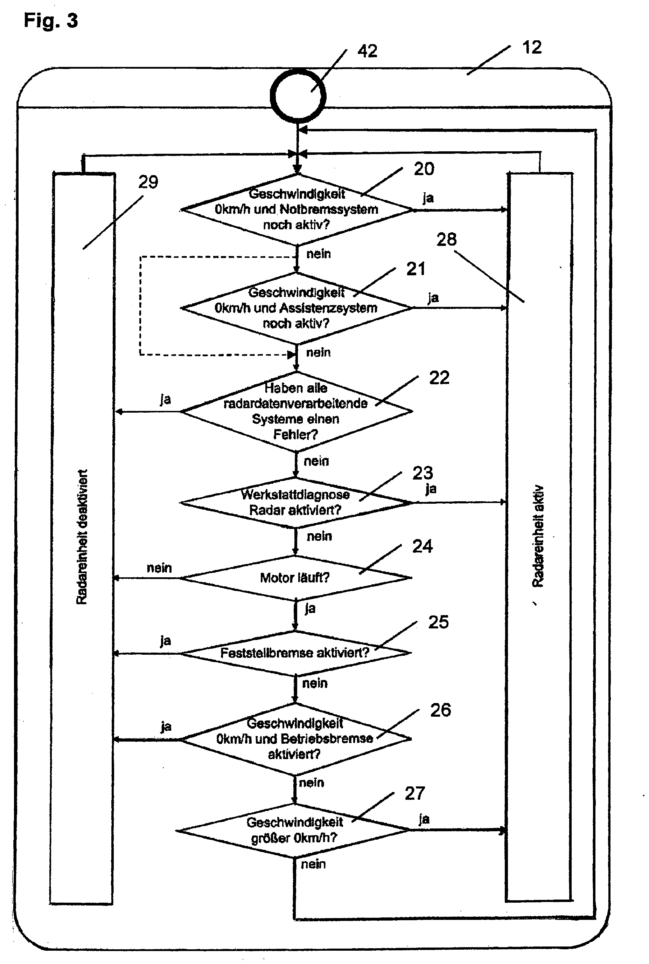

An der Front 2 des Kraftfahrzeugs 1 ist ein Radarsensor 3 angebracht, der über eine CAN-Bussystem-Verbindung 4 mit einem als Abstandssteuerung ausgeführten Steuergerät 5 verbunden ist. Bei dem besagten Steuergerät 5 handelt es sich im gewählten Beispiel um ein Computersystem auf dem ein ACC Stop&Go Fahrerassistenzsystem implementiert ist. Das Steuergerät 5 ist seinerseits über eine CAN-Bussystem-Verbindung 4.4 mit einer Gateway- und Diagnoseinterfaceeinheit 6 verbunden, die ihrerseits über eine CAN-Bussystem-Verbindung 4.1 mit einer Bremsen-Steuereinheit 7 und einer Motorsteuereinheit 8 verbunden ist. Die Bremsen-Steuereinheit 7, die ein Notbremssystem enthält, weist darüber hinaus einen Betriebsbremsen-Sensor 7.1 auf, der den Betätigungszustand der Betriebsbremse feststellt und einen Feststellbremsen-Sensor 7.2 der den Betriebszustand der Feststellbremse ermittelt. Die angesprochene Motorsteuereinheit 8 ermittelt über einen entsprechenden Gaspedal-Sensor 8.1 gegebenenfalls die Stellung des Gaspedals und aus einem Zustandsspeicher 8.2 den Einschaltzustand des Motors, die, wie weiter unten in Verbindung mit dem Flussdiagramm gemäß Fig. 3 gezeigt wird, für die Steuerung des Einschaltzustandes des Radarsensors im Fahrbetrieb benötigt werden.

Über weitere CAN-Bussystem-Verbindungen 4.3, 4.2 ist die Gateway- und Diagnoseinterfaceeinheit 6 mit einem Diagnosestecker 9 und mit einer Getriebesteuereinheit 10 verbunden. Die Getriebesteuereinheit 10 liefert die Information über die augenblickliche Geschwindigkeit des Kraftfahrzeugs, der Diagnosestecker 9 kann mit einer entsprechenden Steckverbindung an ein Diagnosegerät (nicht dargestellt) angeschlossen werden, das dann gegebenenfalls ein Signal liefert, wenn eine Diagnose des Radarsensors 3 durchgeführt werden soll.

Um die Einschaltzeiten des Radarsensors 3 beziehungsweise dessen Sendeeinheit (nicht dargestellt) zu minimieren ist nun vorgesehen, dass mittels einer in das Steuergerät 5 implementierten ersten Routine 11 eine Reihe von Zustandsdaten des Kraftfahrzeugs ermittelt und in einem Speicher (nicht dargestellt) vorgehalten werden. Bei diesen Zustandsdaten handelt es sich wenigstens um den Justagezustand des Radarsensors, den Betätigungszustand der Feststellbremse, den Betätigungszustand der Betriebsbremse, die Eigengeschwindigkeit des Kraftfahrzeugs, das Vorhandensein eines Befehls zur Funktionskontrolle für den Radarsensor 3, das Ergebnis der Funktionskontrolle und den Status des Produktionsprozesses.

Um von dem erfindungsgemäßen Verfahren zur Minimierung der Abstrahlung eines Radarsensors während der Produktion nahtlos auf ein Verfahren zur Minimierung der Abstrahlung eines Radarsensors im Fahrbetrieb übergehen zu können, kann vorgesehen sein, dass in der ersten Routine 11 weitere Zustandsdaten ermittelt und in einem Speicher (nicht dargestellt) vorgehalten werden. Dabei handelt es sich beispielsweise um den Ausführungszustand aller Fahrerassistenzsysteme, die Daten des Radarsensors 3 benutzenden, gegebenenfalls die Gaspedalstellung, der Betriebszustand des Motors und das Vorhandensein eines Diagnosebefehls zur Überprüfung des Radarsensors 3 oder des den Radarsensor 3 verwendende wenigstens eine Fahrerassistenzsystem. Hierzu wird auf die Ausführungen zu Fig. 3 verwiesen, in denen ein solches Verfahren beispielhaft erläutert ist

Diese Zustandsdaten werden über das vorstehend beschriebene CAN-Bussystem zyklisch abgefragt, so dass in dem Steuergerät 5 immer die aktuellen Zustandsdaten verfügbar sind. In Abhängigkeit von den vorstehend genannten Zustandsdaten steuert das Steuergerät 5 mittels einer in diesem implementierten Produktions-Steuerroutine 13 den Einschaltzustand des Radarsensors 3 beziehungsweise dessen Sendeeinheit.

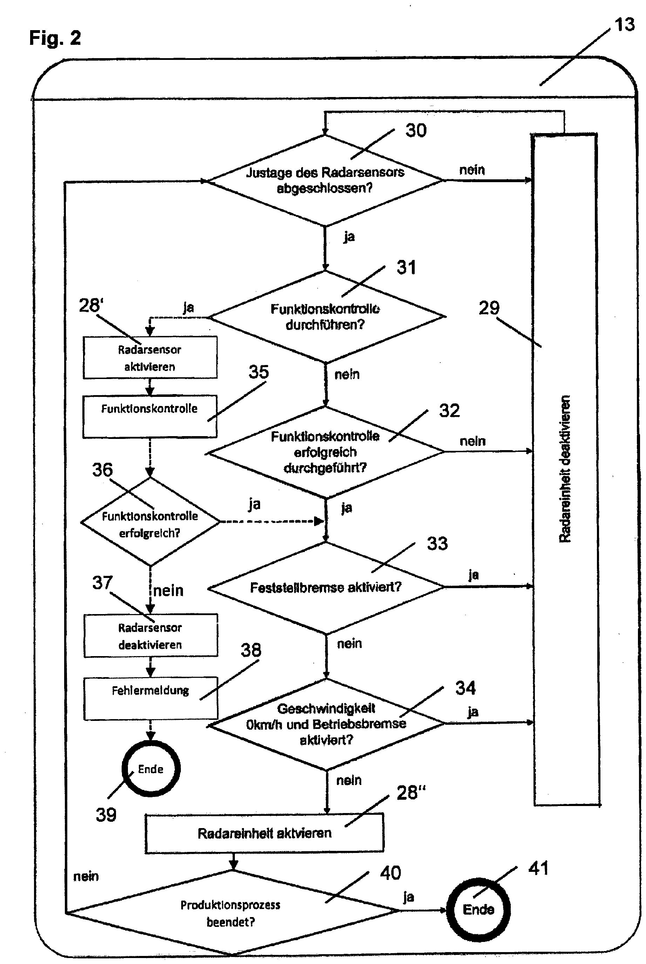

Wie bereits oben ausgeführt, ist der Schaltzustand des Radarsensors 3 während der Produktion an eine Reihe von Bedingungen geknüpft. Die Produktions-Steuerroutine 13 hat die Aufgabe zu ermitteln, ob diese besagten Bedingungen erfüllt sind oder nicht. Im Folgenden wird die Produktions-Steuerroutine 13 anhand des in Fig. 2 dargestellten Flussdiagramms näher erläutert. Es wird dabei davon ausgegangen, dass die oben erwähnten aktuellen Zustandsdaten in dem Steuergerät 5 vorliegen.

In einer ersten Abfrage 30 überprüft das Steuergerät 5, ob die Justage des Radarsensors 3 abgeschlossen ist. Wenn dies nicht zutrifft, wird der Radarsensor 3 im Einschaltzustand 29 inaktiv gehalten oder geschaltet und dann mit der ersten Abfrage 30 fortgefahren.

Wenn diese erste Abfrage 30 zutrifft, überprüft das Steuergerät 5 in einer zweiten Abfrage 31, ob die Funktionskontrolle des Radarsensors 3 durchgeführt werden soll. Wenn dies zutrifft, verzweigt das Steuergerät 5 zur Funktionskontrolle in eine Subroutine (in Fig. 2 mit gestrichelter Linie gezeigt). Wenn diese zweite Abfrage 31 nicht zutrifft, überprüft das Steuergerät 5 in einer dritten Abfrage 32, ob die Funktionskontrolle bereits erfolgreich durchgeführt wurde. Wenn diese dritte Abfrage 32 nicht zutrifft, wird der Radarsensor 3 durch das Steuergerät 5 im Einschaltzustand inaktiv gehalten oder inaktiv geschaltet und dann mit der ersten Abfrage 30 fortgefahren.

In der erwähnten Subroutine wird der Radarsensor 3 durch das Steuergerät 5 in einem ersten Steuerschritt im Einschaltzustand aktiv gehalten oder aktiv geschaltet und in einem zweiten Steuerschritt führt das Steuergerät 5 die Funktionskontrolle durch. Dies kann im einfachsten Fall dadurch geschehen, dass überprüft wird, ob das vom Radarsensor 3 gesendete Signal als reflektiertes Signal von diesem empfangen wird. Triff dies zu, erscheint am Ausgang des Radarsensors 3 eine entsprechende Information, die vom Steuergerät 5 auswertbar ist. Die besagte Information wird in einer Erfolgsabfrage 36 vom Steuergerät 5 abgefragt und gespeichert. Liegt die Information im Radarsensor vor, war die Funktionskontrolle erfolgreich. Das Steuergerät 5 verzweigt von der Subroutine zurück in die Hauptroutine und zwar zwischen der dritten Abfrage 32 und der vierten Abfrage 33. War die Funktionskontrolle nicht erfolgreich, deaktiviert das Steuergerät 5 den Radarsensor beziehungsweise zumindest dessen Sendeeinheit im Steuerschritt 37, gibt im Steuerschritt 38 eine Fehlermeldung aus und beendet im Steuerschritt 39 die Produktions-Steuerroutine 13. An dieser Stelle kann dann zu einer Fehlerbehebungsroutine gesprungen werden.

Wenn die bereits erwähnte dritte Abfrage 32 zutrifft, überprüft das Steuergerät 5 in einer vierten Abfrage 33, ob die Feststellbremse aktiviert ist. Wenn dies zutrifft wird der Radarsensor 3 im Einschaltzustand inaktiv gehalten oder inaktiv geschaltet und dann mit der ersten Abfrage 30 fortgefahren.

Wenn diese vierte Abfrage 33 nicht zutrifft, wird in einer fünften Abfrage 34 durch das Steuergerät 5 überprüft, ob die Geschwindigkeit 0 Km/h und die Betriebsbremse betätigt ist. Wenn dies zutrifft, wird der Radarsensor 3 im Einschaltzustand 29 inaktiv gehalten oder inaktiv geschaltet und dann mit der ersten Abfrage 30 fortgefahren.

Wenn diese fünfte Abfrage 34 nicht zutrifft, wird der Radarsensor 3 durch das Steuergerät 5 im Einschaltzustand 28 aktiv gehalten oder aktiv geschaltet und dann in einer sechsten Abfrage 40 überprüft, ob der Produktionsprozess beendet ist. Hierzu ist beispielsweise in einem Speicher (nicht dargestellt) eine von außen veränderbare Information hinterlegbar, die das Andauern oder den Abschluss des Produktionsprozesses kennzeichnet. Diese gespeicherte Information wird in der sechsten Abfrage 40 vom Steuergerät 5 überprüft. Ist der Produktionsprozess nicht beendet, wird mit der ersten Abfrage 30 fortgefahren, ist der Produktionsprozess beendet wird auch die Produktions-Steuerroutine 13 im Schritt 41 beendet und an den Anfang 42 einer Fahrbetrieb-Routine 12 gesprungen. Eine solche Fahrbetrieb-Routine 12 ist in Fig. 3 gezeigt.

Die Fahrbetrieb-Routine 12 bedient sich ebenfalls der in der Fig. 1 gezeigten Anordnung und ist in ähnlicher Weise wie die Produktions-Routine 13 ausgelegt, um die Einschaltzeiten des Radarsensors 3 beziehungsweise dessen Sendeeinheit im Fahrbetrieb zu minimieren. Dazu ist vorgesehen, dass auch hier mittels der in das Steuergerät 5 implementierten ersten Routine 11 eine Reihe von Zustandsdaten des Kraftfahrzeugs ermittelt und in einem Speicher (nicht dargestellt) vorgehalten werden. Bei diesen Zustandsdaten handelt es sich wenigstens um den Betätigungszustand der Feststellbremse, den Betätigungszustand der Betriebsbremse, den Ausführungszustand des wenigstens einen Fahrerassistenzsystems, gegebenenfalls die Gaspedalstellung, den Betriebszustand des Motors, die Eigengeschwindigkeit des Kraftfahrzeugs und das Vorhandensein eines Diagnosebefehls für den Radarsensor 3 oder das den Radarsensor 3 verwendende wenigstens eine Fahrerassistenzsystem. Diese Zustandsdaten werden über das vorstehend beschriebene CAN-Bussystem zyklisch abgefragt, so dass in dem Steuergerät 5 immer die aktuellen Zustandsdaten verfügbar sind. In Abhängigkeit von den vorstehend genannten Zustandsdaten steuert das Steuergerät 5 mittels einer zweiten in dieser implementierten Steuerroutine 12 den Einschaltzustand des Radarsensors 3.

Der Schaltzustand des Radarsensors 3 ist an eine Reihe von Bedingungen geknüpft. Die Steuerroutine 12 hat die Aufgabe zu ermitteln, ob diese besagten Bedingungen erfüllt sind oder nicht. Im Folgenden wird die Steuerroutine 12 anhand des in Fig. 3 dargestellten Flussdiagramms näher erläutert. Es wird dabei davon ausgegangen, dass die oben erwähnten aktuellen Zustandsdaten in dem Steuergerät 5 vorliegen.

In einer ersten Abfrage 20 überprüft das Steuergerät 5, ob die Eigengeschwindigkeit 0 Km/h ist und ob das z.B. das Notbremssystem enthaltende Fahrerassistenzsystem noch aktiv ist. Wenn dies zutrifft, wird der Radarsensor 3 im Einschaltzustand 28 aktiv gehalten oder aktiv geschaltet und dann mit der ersten Abfrage 20 fortgefahren.

Wenn diese erste Abfrage 20 nicht zutrifft und es ist, wie in Fig. 3 gezeigt, ein weiteres die Radardaten des Radarsensors 3 verarbeitendes Fahrerassistenzsystem vorhanden, wird in einer weiteren Abfrage 21 geprüft ob die Eigengeschwindigkeit 0 Km/h ist und ob das weitere Fahrerassistenzsystem, noch aktiv ist. Wenn dies zutrifft, wird der Radarsensor 3 im Einschaltzustand 28 aktiv gehalten oder aktiv geschaltet und dann mit der ersten Abfrage 20 fortgefahren.

Ist das weitere die Radardaten des Radarsensors 3 verarbeitende Fahrerassistenzsystem abweichend zum gezeigten Beispiel nicht vorhanden, entfällt die weitere Abfrage 21 und das Verfahren folgt dem in der Fig. 3 gestrichelt eingezeichneten Pfeil. Sind abweichend zum gezeigten Beispiel mehrere solcher die Radardaten des Radarsensors 3 verarbeitender Fahrerassistenzsysteme vorhanden, kann für jedes dieser Fahrerassistenzsysteme eine gesonderte Abfrage erfolgen.

Wenn diese weitere Abfrage 21 nicht zutrifft, wird in einer zweiten Abfrage 22 durch das Steuergerät 5 überprüft, ob alle Fahrerassistenzsysteme, die Daten des Radarsensors 3 benutzenden, im Zustand "Fehler" sind. Wenn diese zweite Abfrage 22 zutrifft, wird der Radarsensor 3 im Einschaltzustand 29 inaktiv gehalten oder inaktiv geschaltet und dann mit der ersten Abfrage 20 fortgefahren.

Wenn diese zweite Abfrage 22 nicht zutrifft, wird in einer dritten Abfrage 23 durch das Steuergerät 5 überprüft, ob ein Befehl für eine Wartungsdiagnose zur Überprüfung des wenigstens einen Fahrerassistenzsystems und/ oder des Radarsensors 3 vorliegt. Wenn dies zutrifft, wird der Radarsensor 3 im Einschaltzustand 28 aktiv gehalten oder aktiv geschaltet und dann mit der ersten Abfrage 20 fortgefahren.

Wenn diese dritte Abfrage 23 nicht zutrifft, wird in einer vierten Abfrage 24 durch das Steuergerät 5 überprüft, ob der Antriebsmotor läuft. Wenn dies nicht zutrifft, wird der Radarsensor 3 im Einschaltzustand 29 inaktiv gehalten oder inaktiv geschaltet und dann mit der ersten Abfrage 20 fortgefahren.

Wenn diese vierte Abfrage 24 zutrifft, wird in einer fünften Abfrage 25 durch das Steuergerät 5 überprüft, ob die Feststellbremse aktiviert ist und wenn dies zutrifft, der Radarsensor 3 im Einschaltzustand 29 inaktiv gehalten oder inaktiv geschaltet und dann mit der ersten Abfrage 20 fortgefahren.

Wenn diese fünfte Abfrage 25 nicht zutrifft, wird in einer sechsten Abfrage 26 durch das Steuergerät 5 überprüft, ob die Eigengeschwindigkeit des Kraftfahrzeugs 0 Km/h ist und die Betriebsbremse aktiviert ist und wenn dies zutrifft, wird der Radarsensor 3 im Einschaltzustand 29 inaktiv gehalten oder inaktiv geschaltet und dann mit der ersten Abfrage 20 fortgefahren.

Wenn diese sechste Abfrage 26 nicht zutrifft, wird in einer siebten Abfrage 27 durch das Steuergerät 5 überprüft, ob die Eigengeschwindigkeit größer 0 Km/h ist und wenn dies zutrifft, wird der Radarsensor 3 im Einschaltzustand 28 aktiv gehalten oder aktiv geschaltet und dann mit der ersten Abfrage 20 fortgefahren.

Wenn diese siebte Abfrage 27 nicht zutrifft, wird mit der ersten Abfrage 20 fortgefahren.

Selbstverständlich besteht die Möglichkeit, bei den in den Beispielen nach Fig. 2 und Fig. 3 beschriebenen Routinen Abfragen in ihrer Reihenfolge auszutauschen, ohne dass die Funktionsfähigkeit des Verfahrens darunter leidet, ein solcher Austausch ist dem Fachmann geläufig und wird von der Erfindung mit umfasst.

## Patentansprüche

1. Anordnung für ein Kraftfahrzeug, insbesondere für ein Nutzfahrzeug, mit einem Steuergerät, wobei im Fahrbetrieb auf dem Steuergerät programmgestützt wenigstens ein Fahrerassistenzsystem zur Ausführung kommt, wobei dieses wenigstens eine Fahrerassistenzsystem Abstands- und/ oder Geschwindigkeitsdaten von einem Radarsensor verwendet, die das Steuergerät von dem mit diesem verbundenen Radarsensor übernimmt, wobei das Steuergerät die Eigengeschwindigkeit des Kraftfahrzeugs zur Veränderung des Schaltzustandes des Radarsensors nutzt,
**dadurch gekennzeichnet,**
**dass** ein Radarsensor vorgesehen ist, in den eine Information eingebracht ist und/ oder wird, anhand derer die Zustände "Radarsensor nicht justiert" und "Radarsensor justiert" unterscheidbar sind,
**dass** zur Minimierung der Einschaltzeiten zumindest der Sendeeinheit des Radarsensors (3) während des Produktionsprozesses des Kraftfahrzeugs (1) das Steuergerät (5) über mit ihm direkt oder indirekt verbundene Geber weitere Zustandsdaten des Kraftfahrzeugs(1) zyklisch übernimmt und vorhält und hinsichtlich der Zustandsdaten im Steuergerät (5) Bedingungen vorgegeben sind, unter denen der Schaltzustand "Radarsensor aktiv" oder "Radarsensor inaktiv" aufrechterhalten oder hergestellt wird und in einer ersten Routine (11) die Zustandsdaten zyklisch ermittelt und vorgehalten werden und in einer Produktions-Steuerroutine (13) fortlaufend überprüft wird, welche der vorgegebenen Bedingungen vorliegen und sodann der zugehörige Schaltzustand des Radarsensors (3) aufrechterhalten oder hergestellt wird und wobei der Radarsensor (3) in seinem inaktiven Zustand keine Radarstrahlen aussendet,
**dass** es sich bei den Zustandsdaten wenigstens um den Justagezustand des Radarsensors (3), das Vorhandensein eines Befehls zur Funktionskontrolle des Radarsensors (3), das Ergebnis der Funktionskontrolle, den Betätigungszustand der Feststellbremse, den Betätigungszustand der Betriebsbremse, die Eigengeschwindigkeit des Kraftfahrzeugs (1) und den Status des Produktionsprozesses handelt und dass das Steuergerät (5) programmgestützt einen Steuerungsablauf zyklisch durchläuft, bei dem es den Radarsensor (3), dann
wenn
- der Radarsensor (3) nicht justiert wurde
und der Zustand des Radarsensors inaktiv ist, diesen inaktiv belässt und dann wenn der Zustand des Radarsensors (3) aktiv ist, diesen von seinem aktiven in seinen inaktiven Zustand schaltet,
wenn
- der Radarsensor (3) justiert wurde und
- eine Funktionskontrolle des Radarsensors (3) noch nicht erfolgreich durchgeführt wurde oder
- die Feststellbremse aktiviert ist oder
- die Betriebsbremse aktiviert ist und gleichzeitig die Eigengeschwindigkeit null ist und der Zustand des Radarsensors (3) inaktiv ist, diesen inaktiv belässt und dann wenn der Zustand des Radarsensors (3) aktiv ist, diesen von seinem aktiven in seinen inaktiven Zustand schaltet,
wenn
- der Radarsensor (3) justiert wurde und
- eine Funktionskontrolle des Radarsensors (3) erfolgreich durchgeführt wurde und
- die Feststellbremse nicht aktiviert ist und
- die Betriebsbremse nicht aktiviert ist und gleichzeitig die Eigengeschwindigkeit nicht null ist
und der Zustand des Radarsensors (3) inaktiv ist, diesen aktiv schaltet und dann wenn der Zustand des Radarsensors (3) aktiv ist, diesen in seinem aktiven Zustand belässt, wenn
- der Radarsensor (3) justiert wurde und
- eine Funktionskontrolle durchgeführt werden soll
und der Zustand des Radarsensors (3) inaktiv ist, diesen aktiv schaltet und dann wenn der Zustand des Radarsensors (3) aktiv ist, diesen in seinem aktiven Zustand belässt und sodann die Funktionskontrolle durchführt und das Ergebnis der Funktionskontrolle festhält.

2. Anordnung nach Anspruch 1, **dadurch gekennzeichnet, dass** ein in seiner Abstrahlleistung veränderbarer Radarsensor (3) zum Einsatz kommt und dass Mittel vorgesehen sind, die Abstrahlleistung des Radarsensors (3) im Produktionsprozess gegenüber seiner maximalen oder nominalen Strahlungsleistung zu reduzieren.

3. Verfahren zum Betreiben eines Steuergerätes (5) in einem Kraftfahrzeug (1) mit einem Radarsensor (3), wobei auf dem Steuergerät (5) im Fahrbetrieb des Kraftfahrzeugs (1) programmgestützt wenigstens ein Fahrerassistenzsystem zur Ausführung kommt, wobei dieses wenigstens eine Fahrerassistenzsystem Abstands- und/ oder Geschwindigkeitsdaten von dem Radarsensor (3) verwendet, die das Steuergerät (5) von diesem übernimmt, **dadurch gekennzeichnet, dass**
- das Steuergerät (5) in der Produktion des Kraftfahrzeugs (1) von dem Zeitpunkt an, zu dem die Steuersysteme des Kraftfahrzeugs (1) und der Radarsensor (3) funktionsfähig sind, in einer ersten Routine (11) zyklisch über mit ihm direkt oder indirekt verbundene Geber Zustandsdaten des Kraftfahrzeugs (1) abfragt und zwischenspeichert, wobei es sich bei diesen Zustandsdaten wenigstens um den Justagezustand des Radarsensors (3), den Betätigungszustand der Feststellbremse, den Betätigungszustand der Betriebsbremse, die Eigengeschwindigkeit des Kraftfahrzeugs (1) und das Vorhandensein eines Befehls zur Funktionskontrolle für den Radarsensor (3), das Ergebnis der Funktionskontrolle und den Status des Produktionsprozesses handelt und dass
- das Steuergerät (5) unter Verwendung einer Produktions-Steuerroutine (13), in einer ersten Abfrage (30) ermittelt, ob die Justage des Radarsensors (3) abgeschlossen ist und wenn dies nicht zutrifft, den Radarsensor (3) in einem Steuerschritt (29) im Einschaltzustand inaktiv hält, und damit keine Radarstrahlen aussendet, oder in diesen schaltet und dann mit der ersten Abfrage (30) fortfährt,
- das Steuergerät (5), wenn diese erste Abfrage (30) zutrifft, in einer zweiten Abfrage (31) prüft ob eine Funktionskontrolle des Radarsensors (3) durchgeführt werden soll und wenn dies zutrifft, zur Funktionskontrolle in eine Subroutine verzweigt,
- das Steuergerät (5), wenn diese zweite Abfrage (31) nicht zutrifft, in einer dritten Abfrage (32) überprüft, ob die Funktionskontrolle des Radarsensors (3) bereits erfolgreich durchgeführt wurde und wenn diese nicht zutrifft, den Radarsensor (3) in einem Steuerschritt (29) im Einschaltzustand inaktiv hält oder inaktiv schaltet und dann mit der ersten Abfrage (30) fortfährt,
- das Steuergerät in der Subroutine den Radarsensor (3) in einem ersten Steuerschritt (28') im Einschaltzustand aktiv hält oder aktiv schaltet und in einem zweiten Steuerschritt (35) die Funktionskontrolle durchführt und in einer nachfolgenden Erfolgsabfrage (36) ermittelt, ob die Funktionskontrolle erfolgreich war,
- das Steuergerät (5), wenn die Erfolgsabfrage (36) zutrifft aus der Subroutine zwischen der dritten Abfrage (32) und einer vierten Abfrage (33) wieder in die Hauptroutine zurück verzweigt,
- das Steuergerät (5), wenn die Erfolgsabfrage (36) nicht zutrifft, den Radarsensor in einem Steuerschritt (37) deaktiviert, in einem Steuerschritt (38) eine Fehlermeldung ausgibt und die Produktions-Steuerroutine (13) in einem Steuerschritt (39) beendet,
- das Steuergerät (5), wenn die dritte Abfrage (32) zutrifft, in einer vierten Abfrage (33) überprüft, ob die Feststellbremse aktiviert ist und wenn dies zutrifft, den Radarsensor (3) in einem Steuerschritt (29) im Einschaltzustand inaktiv hält oder inaktiv schaltet und dann mit der ersten Abfrage (30) fortfährt,
- das Steuergerät (5), wenn die vierte Abfrage (33) nicht zutrifft, in einer fünften Abfrage (34) überprüft, ob die Eigengeschwindigkeit des Kraftfahrzeugs (1) 0 Km/h und die Betriebsbremse betätigt ist und wenn dies zutrifft den Radarsensor (3) in einem Steuerschritt (29) im Einschaltzustand inaktiv hält oder inaktiv schaltet und dann mit der ersten Abfrage (30) fortfährt,
- das Steuergerät (5), wenn diese fünfte Abfrage (34) nicht zutrifft, den Radarsensor in einem Steuerschritt (28") im Einschaltzustand aktiv hält oder aktiv schaltet und dann in einer sechsten Abfrage (40) überprüft, ob der Produktionsprozess beendet ist und wenn dies nicht zutrifft, mit der ersten Abfrage (30) fortfährt,
- das Steuergerät (5), wenn diese sechste Abfrage (40) zutrifft, in einem Steuerschritt (41) auch die Produktions-Steuerroutine beendet.

4. Verfahren nach Anspruch 3, **dadurch gekennzeichnet, dass** das Steuergerät (5) nach dem Beenden der Produktions-Steuerroutine (13) an den Anfang einer Fahrbetrieb-Routine (12) springt.

5. Verfahren nach Anspruch 3, **dadurch gekennzeichnet, dass** das Steuergerät (5) die Funktionsfähigkeit des Radarsensors in der Weise feststellt, dass es in der Funktionsabfrage (36) prüft, ob der Radarsensor Informationen über empfangene Reflexionen von zuvor von ihm gesendeten Radarsignalen enthält.

6. Verfahren nach Anspruch 3, **dadurch gekennzeichnet, dass** das Steuergerät (5) die Funktionsfähigkeit des Radarsensors (3) in der Weise feststellt, dass es empfangene Reflexionsinformationen, die unter Zuhilfenahme von externen Messreflektoren aus vom Radarsensor (3) gesendeten Radarsignalen erzeugt wurden, mit gespeicherten Reflexionsinformationen verglichen und abhängig vom Ergebnis eine Information über den Erfolg der Funktionskontrolle in einem Speicher hinterlegt und diese bei der Funktionsabfrage (36) sowie bei der dritten Abfrage (32) ausliest.

7. Verfahren nach Anspruch 3, **dadurch gekennzeichnet, dass** in einem Speicher des Steuergeräts (5) eine von außen veränderbare Statusinformation ablegbar ist, die das Andauern oder den Abschluss des Produktionsprozesses kennzeichnet und das Steuergerät (5) diese gespeicherte Information in der sechsten Abfrage (40) aus dem Speicher ausliest.

8. Verfahren nach Anspruch 3, **dadurch gekennzeichnet, dass** ein in seiner Abstrahlleistung veränderbarer Radarsensor (3) zum Einsatz kommt und dass das Steuergerät (5) die Abstrahlleistung des Radarsensors (3) im ersten Steuerschritt (28') der Subroutine und/oder in dem Steuerschritt (28"), in dem das Steuergerät (5) den Radarsensor (3) im Einschaltzustand aktiv hält oder aktiv schaltet, gegenüber seiner maximalen oder nominalen Strahlungsleistung reduziert.

9. Verfahren nach Anspruch 8, **dadurch gekennzeichnet, dass** die Reduzierung der Abstrahlleistung des Radarsensors (3) dem ersten Steuerschritt (28') der Subroutineunterschiedlich zu der Reduzierung der Abstrahlleistung des Radarsensors (3) in dem Steuerschritt (28"), in dem das Steuergerät (5) den Radarsensor (3) im Einschaltzustand aktiv hält oder aktiv schaltet, ist.

10. Verfahren nach Anspruch 8 oder 9, **dadurch gekennzeichnet, dass** das Steuergerät (5) eine bestehende Reduzierung der Abstrahlleistung des Radarsensors (3) mit Beendigung der Produktions-Steuerroutine (13) aufhebt.

## Claims

1. Arrangement for a motor vehicle, in particular for a commercial vehicle, having a controller, wherein at least one driver assistance system is executed on the controller in program-assisted fashion in driving mode, wherein this at least one driver assistance system uses distance and/or speed data from a radar sensor that are accepted by the controller from the radar sensor connected thereto, wherein the controller uses the particular speed of the motor vehicle to change the switching state of the radar sensor,
**characterized**
**in that** there is provision for a radar sensor that has had and/or has information put into it that is able to be used to distinguish between the states "radar sensor not aligned" and "radar sensor aligned",
**in that** the switched-on times of at least the transmission unit of the radar sensor (3) are minimized during the production process of the motor vehicle (1) by virtue of the controller (5) using transducers directly or indirectly connected thereto to cyclically accept and keep further state data of the motor vehicle (1), and conditions under which the switching state "radar sensor active" or "radar sensor inactive" is maintained or produced being prescribed for the state data in the controller (5), and the state data being cyclically ascertained and kept in a first routine (11), and a continuous check being performed in a production control routine (13) to ascertain which of the prescribed conditions are present, and then the associated switching state of the radar sensor (3) being maintained or produced, and wherein the radar sensor (3) transmits no radar beams in its inactive state,
**in that** the state data are at least the alignment state of the radar sensor (3), the presence of a command for the performance check on the radar sensor (3), the result of the performance check, the operated state of the parking brake, the operated state of the service brake, the particular speed of the motor vehicle (1) and the status of the production process and in that the controller (5), in program-assisted fashion, cyclically performs a control sequence in which,
if
- the radar sensor (3) has not been aligned
and the state of the radar sensor is inactive, it leaves the radar sensor (3) the latter inactive and, if the state of the radar sensor (3) is active, switches the latter from its active to its inactive state,
if
- the radar sensor (3) has been aligned and
- a performance check on the radar sensor (3) has not yet been performed successfully or
- the parking brake is activated or
- the service brake is activated and at the same time the particular speed is zero and the state of the radar sensor (3) is inactive, it leaves the latter inactive and, if the state of the radar sensor (3) is active, switches the latter from its active to its inactive state,
if
- the radar sensor (3) has been aligned and
- a performance check on the radar sensor (3) has been performed successfully and
- the parking brake is not activated and
- the service brake is not activated and at the same time the particular speed is not zero
and the state of the radar sensor (3) is inactive, it activates the latter and, if the state of the radar sensor (3) is active, leaves the latter in its active state,
if
- the radar sensor (3) has been aligned and
- a performance check is meant to be performed
and the state of the radar sensor (3) is inactive, it activates the latter and, if the state of the radar sensor (3) is active, leaves the latter in its active state and then performs the performance check and records the result of the performance check.

2. Arrangement according to Claim 1, **characterized in that** a radar sensor (3) having alterable emission power is used and **in that** there is provision for means for reducing the emission power of the radar sensor (3) in the production process as compared with its maximum or nominal radiation power.

3. Method for operating a controller (5) in a motor vehicle (1) having a radar sensor (3), wherein at least one driver assistance system is executed on the controller (5) in the driving mode of the motor vehicle (1) in program-assisted fashion, wherein this at least one driver assistance system uses distance and/or speed data from the radar sensor (3) that are accepted from the latter by the controller (5), **characterized in that**
- during production of the motor vehicle (1) the controller (5) cyclically uses transducers directly or indirectly connected thereto to query and buffer-store state data of the motor vehicle (1) in a first routine (11) from the time at which the control systems of the motor vehicle (1) and the radar sensor (3) are operational onward, wherein these state data are at least the alignment state of the radar sensor (3), the operated state of the parking brake, the operated state of the service brake, the particular speed of the motor vehicle (1) and the presence of a command for the performance check on the radar sensor (3), the result of the performance check and the status of the production process and **in that**
- the controller (5) uses a production control routine (13) to ascertain, in a first test (30), whether the alignment of the radar sensor (3) is complete and, if this is not true, keeps the radar sensor (3) inactive, and hence transmits no radar beams, in the switched-on state in a control step (29), or switches it to said switched-on state, and then continues with the first test (30),
- the controller (5), if this first test (30) is true, uses a second test (31) to check whether a performance check on the radar sensor (3) is meant to be performed and, if this is true, branches to a subroutine for the purpose of the performance check,
- the controller (5), if this second test (31) is not true, uses a third test (32) to check whether the performance check on the radar sensor (3) has already been performed successfully and, if this is not true, keeps the radar sensor (3) inactive, or deactivates it, in the switched-on state in a control step (29), and then continues with the first test (30),
- the controller keeps the radar sensor (3) active, or activates it, in a switched-on state in a first control step (28') in the subroutine and, in a second control step (35), performs the performance check and uses a subsequent test for success (36) to ascertain whether the performance check was successful,
- the controller (5), if the test for success (36) is true, branches back to the main routine again from the subroutine between the third test (32) and a fourth test (33),
- the controller (5), if the test for success (36) is not true, deactivates the radar sensor in a control step (37), outputs an error message in a control step (38) and ends the production control routine (13) in a control step (39),
- the controller (5), if the third test (32) is true, uses a fourth test (33) to check whether the parking brake is activated and, if this is true, keeps the radar sensor (3) inactive, or deactivates it, in the switched-on state in a control step (29), and then continues with the first test (30),
- the controller (5), if the fourth test (33) is not true, uses a fifth test (34) to check whether the particular speed of the motor vehicle (1) is 0 km/h and the service brake has been operated and, if this is true, keeps the radar sensor (3) inactive, or deactivates it, in a switched-on state in a control step (29), and then continues with the first test (30),
- the controller (5), if this fifth test (34) is not true, keeps the radar sensor active, or activates it, in the switched-on state in a control step (28"), and then uses a sixth test (40) to check whether the production process has ended and, if this is not true, continues with the first test (30),
- the controller (5), if this sixth test (40) is true, also ends the production control routine in a control step (41).

4. Method according to Claim 3, **characterized in that** the controller (5) jumps to the beginning of a driving mode routine (12) after ending the production control routine (13).

5. Method according to Claim 3, **characterized in that** the controller (5) establishes that the radar sensor is operational by using the performance test (36) to check whether the radar sensor contains information about received reflections of radar signals previously sent thereby.

6. Method according to Claim 3, **characterized in that** the controller (5) establishes that the radar sensor (3) is operational by comparing received reflection information, produced using external measurement reflectors from radar signals sent by the radar sensor (3), with stored reflection information and taking the result as a basis for storing information about the success of the performance check in a memory and reading said information for the performance test (36) and for the third test (32).

7. Method according to Claim 3, **characterized in that** a memory of the controller (5) is able to be used to store externally alterable status information denoting the continuation or conclusion of the production process, and the controller (5) reads this stored information from the memory in the sixth test (40).

8. Method according to Claim 3, **characterized in that** a radar sensor (3) having alterable emission power is used and **in that** the controller (5) reduces the emission power of the radar sensor (3), as compared with its maximum or nominal radiation power, in the first control step (28') of the subroutine and/or in the control step (28") in which the controller (5) keeps the radar sensor (3) active, or activates it, in the switched-on state.

9. Method according to Claim 8, **characterized in that** the reduction of the emission power of the radar sensor (3) the first control step (28) of the subroutine is different from the reduction of the emission power of the radar sensor (3) in the control step (28") in which the controller (5) keeps the radar sensor (3) active, or activates it, in the switched-on state.

10. Method according to Claim 8 or 9, **characterized in that** the controller (5) cancels an existing reduction in the emission power of the radar sensor (3) when it ends the production control routine (13).

## Revendications

1. Agencement pour un véhicule automobile, en particulier pour un véhicule utilitaire, comprenant un appareil de commande, au moins un système d'assistance au conducteur étant mis en oeuvre en mode de conduite sur l'appareil de commande à l'aide d'un programme, cet au moins un système d'assistance au conducteur utilisant des données de distance et/ou de vitesse provenant d'un capteur radar, que l'appareil de commande reprend du capteur radar connecté à celui-ci, l'appareil de commande utilisant la vitesse propre du véhicule automobile pour faire varier l'état de commutation du capteur radar,
**caractérisé en ce**
**qu'**il est prévu un capteur radar dans lequel est introduite une information à l'aide de laquelle les états « capteur radar non ajusté » et « capteur radar ajusté » peuvent être distingués,
en ce que pour minimiser les temps de commutation d'au moins l'unité émettrice du capteur radar (3) dans le processus de production du véhicule automobile (1), l'appareil de commande (5), par le biais de transmetteurs connectés directement ou indirectement à celui-ci, reprend cycliquement d'autres données d'état du véhicule automobile (1) et les conserve, et en ce qui concerne les données d'état dans l'appareil de commande (5) des conditions sont prédéfinies dans lesquelles l'état de commutation « capteur radar actif » ou « capteur radar inactif » est maintenu ou établi et dans un premier sous-programme (11), les données d'état sont déterminées cycliquement et mises à disposition, et dans un sous-programme de commande de production (13) on contrôle en continu quelles sont les conditions prédéfinies présentes et l'état de commutation associé du capteur radar (3) est alors maintenu ou établi et le capteur radar (3) n'envoyant aucun faisceau radar dans son état inactif,
en ce que les données d'état sont au moins l'état d'ajustement du capteur radar (3), la présence d'un ordre de contrôle du fonctionnement du capteur radar (3), le résultat du contrôle de fonctionnement, l'état d'actionnement du frein de stationnement, l'état d'actionnement du frein de service, la vitesse propre du véhicule automobile (1) et l'état du processus de production, et en ce que l'appareil de commande (5) exécute cycliquement une procédure de commande à l'aide d'un programme, dans laquelle, lorsque
- le capteur radar (3) n'a pas été ajusté
et **que** l'état du capteur radar est inactif, il laisse le capteur radar (3) le dernier inactif et lorsque l'état du capteur radar (3) est actif, il commute celui-ci de son état actif à son état inactif,
lorsque
- le capteur radar (3) a été ajusté et
- un contrôle du fonctionnement du capteur radar (3) n'a pas encore été effectué avec succès ou
- le frein de stationnement est activé ou
- le frein de service est activé et en même temps la vitesse propre est nulle et l'état du capteur radar (3) est inactif, il laisse le capteur radar (3) inactif et lorsque l'état du capteur radar (3) est actif, il commute celui-ci de son état actif dans son état inactif,
lorsque
- le capteur radar (3) a été ajusté et
- un contrôle du fonctionnement du capteur radar (3) a été effectué avec succès
et
- le frein de stationnement n'est pas activé et
- le frein de service n'est pas activé et en même temps la vitesse propre n'est pas nulle et l'état du capteur radar (3) est inactif, il commute le capteur radar (3) à l'état actif et lorsque l'état du capteur radar (3) est actif, il laisse celui-ci dans son état actif, lorsque
- le capteur radar (3) a été ajusté et
- un contrôle du fonctionnement doit être effectué et l'état du capteur radar (3) est inactif, il commute le capteur radar (3) à l'état actif et lorsque l'état du capteur radar (3) est actif, il laisse celui-ci dans son état actif et effectue ensuite le contrôle du fonctionnement et consigne le résultat du contrôle du fonctionnement.

2. Agencement selon la revendication 1, **caractérisé en ce qu'**un capteur radar (3) dont la puissance de rayonnement peut être modifiée est utilisé et **en ce que** des moyens sont prévus pour réduire la puissance de rayonnement du capteur radar (3) au cours du processus de production par rapport à sa puissance de rayonnement maximale ou nominale.

3. Procédé pour faire fonctionner un appareil de commande (5) dans un véhicule automobile (1) comprenant un capteur radar (3), au moins un système d'assistance au conducteur étant mis en oeuvre sur l'appareil de commande (5) en mode de conduite du véhicule automobile (1) à l'aide d'un programme, cet au moins un système d'assistance au conducteur utilisant des données de distance et/ou de vitesse provenant du capteur radar (3), que l'appareil de commande (5) reprend de celui-ci, **caractérisé en ce que**
- l'appareil de commande (5), au cours de la production du véhicule automobile (1), à partir de l'instant auquel les systèmes de commande du véhicule automobile (1) et le capteur radar (3) sont fonctionnels, interroge cycliquement, dans un premier sous-programme (11), par le biais de transmetteurs connectés directement ou indirectement avec lui, des données d'état du véhicule automobile (1) et les mémorise temporairement, ces données d'état étant au moins l'état d'ajustement du capteur radar (3), l'état d'actionnement du frein de stationnement, l'état d'actionnement du frein de service, la vitesse propre du véhicule automobile (1) et la présence d'un ordre de contrôle du fonctionnement du capteur radar (3), le résultat du contrôle du fonctionnement et l'état du processus de production et **en ce que**
- l'appareil de commande (5), en utilisant un sous-programme de commande de production (13), détermine, lors d'une première interrogation (30), si l'ajustement du capteur radar (3) est terminé et si cela n'est pas le cas, maintient le capteur radar (3) dans une étape de commande (29) dans l'état de commutation inactif, et de ce fait n'émet aucun faisceau radar, ou le commute à cet état, et continue ensuite avec la première interrogation (30),
- l'appareil de commande (5) lorsque cette première interrogation (30) est positive, vérifie, dans une deuxième interrogation (31), si un contrôle du fonctionnement du capteur radar (3) doit être effectué et si c'est le cas, passe dans un sous-programme secondaire pour le contrôle du fonctionnement,
- l'appareil de commande (5) lorsque cette deuxième interrogation (31) n'est pas positive, vérifie, dans une troisième interrogation (32), si le contrôle du fonctionnement du capteur radar (3) a déjà été effectué avec succès et si cela n'est pas le cas, maintient le capteur radar (3) dans l'état de commutation inactif dans une étape de commande (29) ou le commute à l'état inactif et continue ensuite avec la première interrogation (30),
- l'appareil de commande, dans le sous-programme secondaire, maintient le capteur radar (3) dans l'état de commutation actif dans une première étape de commande (28') ou le commute à l'état actif et dans une deuxième étape de commande (35) effectue le contrôle du fonctionnement, et dans une interrogation de succès subséquente (36), détermine si le contrôle du fonctionnement a été un succès,
- l'appareil de commande (5), lorsque l'interrogation de succès (36) est positive, revient à nouveau au sous-programme principal à partir du sous-programme secondaire entre la troisième interrogation (32) et une quatrième interrogation (33),
- l'appareil de commande (5), lorsque l'interrogation de succès (36) est négative, désactive le capteur radar dans une étape de commande (37), émet un avertissement d'erreur dans une étape de commande (38) et termine le sous-programme de commande de production (13) dans une étape de commande (39),
- l'appareil de commande (5), lorsque la troisième interrogation (32) est positive, vérifie, dans une quatrième interrogation (33), si le frein de stationnement est activé et si c'est le cas, maintient le capteur radar (3) dans l'état de commutation inactif dans une étape de commande (29) ou le commute à l'état inactif puis continue avec la première interrogation (30),
- l'appareil de commande (5), lorsque la quatrième interrogation (33) est négative, vérifie, dans une cinquième interrogation (34), si la vitesse propre du véhicule automobile (1) est de 0 km/h et si le frein de service est activé et si c'est le cas, maintient le capteur radar (3) dans l'état de commutation inactif dans une étape de commande (29) ou le commute à l'état inactif puis continue avec la première interrogation (30),
- l'appareil de commande (5), lorsque cette cinquième interrogation (34) est négative, maintient le capteur radar dans l'état de commutation actif dans une étape de commande (28") ou le commute à l'état actif puis vérifie, dans une sixième interrogation (40), si le processus de production est terminé et si cela n'est pas le cas, continue avec la première interrogation (30),
- l'appareil de commande (5) lorsque cette sixième interrogation (40) est positive, termine également le sous-programme de commande de production dans une étape de commande (41).

4. Procédé selon la revendication 3, **caractérisé en ce que** l'appareil de commande (5), après la fin du sous-programme de commande de production (13), revient au début d'un sous-programme de mode de conduite (12).

5. Procédé selon la revendication 3, **caractérisé en ce que** l'appareil de commande (5) établit la fonctionnalité du capteur radar de telle manière qu'il vérifie, dans l'interrogation de fonctionnement (36), si le capteur radar contient des informations concernant des réflexions reçues de signaux radar envoyés préalablement par lui.

6. Procédé selon la revendication 3, **caractérisé en ce que** l'appareil de commande (5) établit la fonctionnalité du capteur radar (3) de telle manière qu'il compare des informations de réflexions reçues qui ont été produites à l'aide de réflecteurs de mesure externes à partir des signaux radar envoyés par le capteur radar (3), avec des informations de réflexion mémorisées et en fonction du résultat, consigne une information concernant le succès du contrôle du fonctionnement dans une mémoire et lit celle-ci lors de l'interrogation de fonctionnement (36) ainsi que lors de la troisième interrogation (32).

7. Procédé selon la revendication 3, **caractérisé en ce qu'**une information de statut pouvant être modifiée depuis l'extérieur peut être consignée dans une mémoire de l'appareil de commande (5), laquelle caractérise la poursuite ou la terminaison du processus de production et l'appareil de commande (5) lit cette information mémorisée dans la mémoire au cours de la sixième interrogation (40).

8. Procédé selon la revendication 3, **caractérisé en ce que** l'on utilise un capteur radar (3) dont la puissance de rayonnement peut être modifiée et **en ce que** l'appareil de commande (5) réduit la puissance de rayonnement du capteur radar (3) par rapport à sa puissance de rayonnement maximale ou nominale dans la première étape de commande (28') du sous-programme secondaire et/ou dans l'étape de commande (28"), dans laquelle l'appareil de commande (5) maintient le capteur radar (3) dans l'état de commutation actif ou le commute à l'état actif.

9. Procédé selon la revendication 8, **caractérisé en ce que** la réduction de la puissance de rayonnement du capteur radar (3) la première étape de commande (28') du sous-programme secondaire est différente de la réduction de la puissance de rayonnement du capteur radar (3) dans l'étape de commande (28") dans laquelle l'appareil de commande (5) maintient le capteur radar (3) dans l'état de commutation actif ou le commute à l'état actif.

10. Procédé selon la revendication 8 ou 9, **caractérisé en ce que** l'appareil de commande (5) annule une réduction existante de la puissance de rayonnement du capteur radar (3) à la fin du sous-programme de commande de production (13).
